# EUROPEAN PATENT APPLICATION

(11) **EP 2 633 960 A1**
(43) Date of publication of application: **04.09.2013**
(21) Application number: 11835416.6
(22) Date of filing: 01.02.2011
(51) Int. Cl.: B25J 15/00, B25J 19/00, B65G 57/00, B65G 61/00

(54) **SWITCHING MECHANISM OF CLAMP**

(30) Priority: 29.10.2010 CN 201020583482 U
(71) Applicant: China Aluminum International Engineering Corporation Limited, Beijing 100093 (CN)
(72) Inventor: SHENG, Boqing, Guizhou 550081 (CN); LI, Yaping, Guizhou 550081 (CN)
(74) Representative: Maxton Langmaack & Partner
(86) International application number: PCT/CN2011/000194
(87) International publication number: WO 2012/055141

(57) **Abstract**

A switching mechanism of a clamp comprises clamping plates (1) and crank arm mechanisms (2). The upper ends of crank arm mechanisms (2) are connected to a hanger beam (9). The upper part of the hanger beam (9) is equipped with a guide chute (10) where slidable insert plates (3) are arranged. Each insert plate (3) has a key-shaped groove (4) composed of a long strip hole and a large round hole. The hanger beam (9) is provided with a hydraulic driving unit (6) which can drive rotation of the insert plates (3). One support rod (5) is provided in the groove (4) of each insert plate (3) and a boss (7) is formed on the upper end of each support rod (5). The diameter of the boss (7) is greater than the width of the long strip hole and less than the diameter of the large round hole. The lower end of each support rod (5) is connected with a set of clamping plates (1) through a short connecting rod (11). The mechanism has a simple structure and a low manufacturing cost. The mechanism is not influenced by height errors of carbon blocks during operation, thereby being easy to operate and insusceptible to damage.

## Description

### TECHNICAL FIELD

The present invention relates to a guidable plate inserted switching mechanism of a clamp for use in a carbon block stacking machine, which belongs to the technical field of clamp of carbon block stacking machine.

### BACKGROUND ART

In aluminum metallurgy industry, anode carbon block stacking unit is used to complete stacking of raw anodes and baked anodes after roasting during in-out storage. The carbon block stacking unit loads the raw and baked carbon blocks from a carbon block conveyor line and unloads the same to the carbon block storage for stacking, with more than 10 carbon blocks being clamped each time, all of which have to be loaded/unloaded consistently without missing a block, i.e., all clamps are required to open or close consistently. Most of the existing carbon block stacking units clamp 20 anode carbon blocks each time. During clamping process of the clamp, the clamp must be opened, so that the whole clamp unit is lowered down to be in contact with the top of the carbon block, and then the clamp must be closed when the carbon block needs to be clamped, such that each clamp grasps the carbon block independently by the weight of the carbon block as the clamp rises. Common approaches implementing the switching mechanism of the clamp include means of pneumatic, hydraulic and lead cam, etc. At present, most of the stacking units at home and abroad use motor-reducer to rotate a long shaft to a certain position by contracting a wire rope with a reel, so that each clamp is in an opened state, whereby the motor reverses such that the wire rope is in a completely relaxed state when there is a need to clamp the carbon block, and the carbon block is grasped by means of the weight of its own when the clamp rises. This renders a high manufacturing cost of the machine, imposes high performance requirements on the reducer, and requires the wire rope to be adjusted frequently due to its vulnerability of being tensioned, thus the wire rope is easy to break due to improper maintenance and operation. Therefore, the existing switching mechanism of clamp used in carbon block stacking machine is still undesirable.

### SUMMARY OF THE INVENTION

The object of the invention is to: provide a guidable plate inserted switching mechanism of a clamp for use in a carbon block stacking machine, which is of simple structure, reliable operation, low manufacturing cost and convenient maintenance, so as to overcome deficiencies of the prior art.

The present invention lies in that a guidable plate inserted switching mechanism of a clamp for use in a carbon block stacking machine of the present invention, the switching mechanism comprising clamping plates and crank arm mechanisms, the lower end of each set of crank arm mechanism being connected with a set of clamping plates, the upper end of each set of crank arm mechanism being connected to a hanger beam, the upper part of the hanger beam being equipped with a guide chute wherein slidable insert plates are arranged, the insert plates being provided with a key-shaped groove composed of a long strip hole and a large round hole, the hanger beam being provided with a hydraulic driving unit which can drive the insert plates to move, one support rod being provided in the groove of each insert plate and a boss being formed on the upper end of each support rod, the diameter of the boss being greater than the width of the long strip hole of the groove and less than the diameter of the large round hole of the groove, the lower end of each support rod being connected with a set of clamping plates through a short connecting rod.

The above described hanger beam is equipped with more than two insert plates, and each of the insert plates is connected with a set of clamping plates through the support rod.

Each of the above insert plates is connected with each other by a connecting plate.

The above hydraulic driving unit is connected with a switching signal indicating device.

As a result of the above technical solution, the present invention completely omits the existing structure of wire rope. The present invention uses one hydraulic driving unit to push and pull all the insert plates, so as to achieve the purpose of the control of opening and closing of each clamping plate of the clamp. The present invention can enable more than 20 clamping plates of the clamp to move consistently by means of the push and pull with one hydraulic driving unit, while the consistency is high and the switching time is adjustable. Therefore, compared with the prior art, the present invention not only has advantages of simple structure, reliable operation, low manufacturing cost and convenient maintenance, but also has advantages of being not influenced by height errors of carbon blocks in use, easy to operate and insusceptible to damage.

### BRIEF DESCRIPTION OF THE DRAWINGS

Fig. 1 is a schematic structural view of the present invention;
Fig. 2 is a schematic structural view of the insert plates according to the present invention;
Fig. 3 is a schematic structural view of the connection of the insert plates with the hydraulic driving unit according to the present invention.
Fig. 4 is a schematic structural view of the connection of the insert plates therebetween according to the present invention.

### DETAILED DESCRIPTION OF THE PREFERRED EMBODIMENTS

The present invention is further described below in conjunction with the accompanying drawings and embodiments thereof.

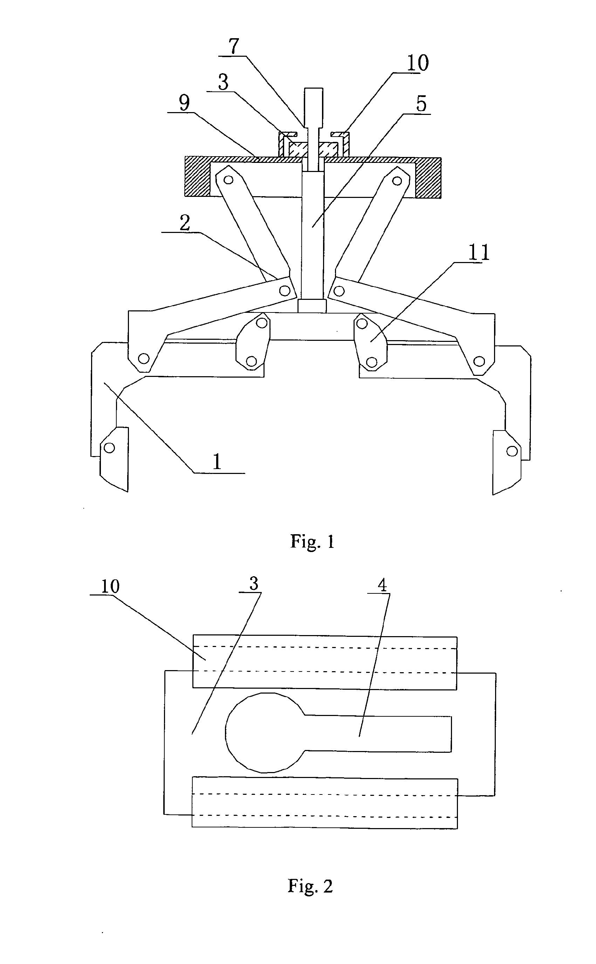

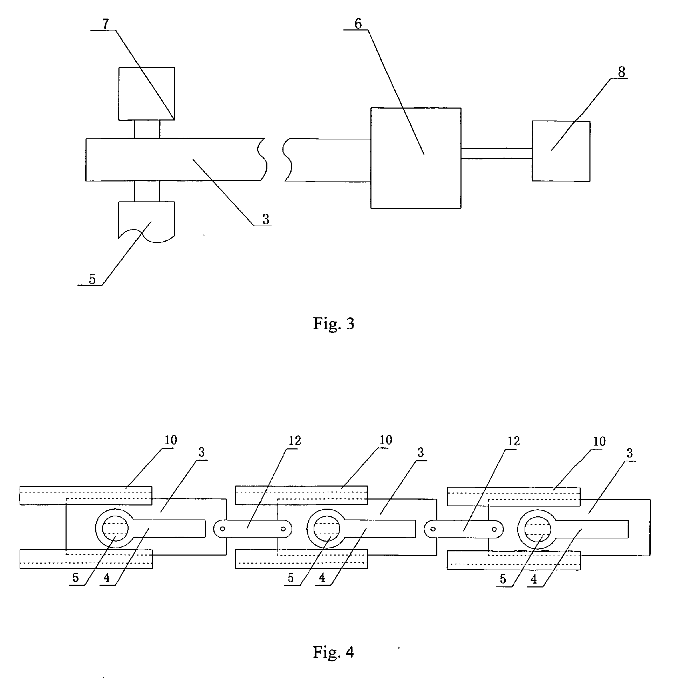

In an embodiment of the present invention, the structure of a guidable plate inserted switching mechanism of a clamp for use in a carbon block stacking machine of the present invention is shown in Fig. 1. In production, clamping plates 1 and crank arm mechanisms 2 can use conventional structures in the prior art. The lower end of each set of crank arm mechanism 2 is connected with a set of clamping plates 1. The upper end of each set of crank arm mechanism 2 is connected to a hanger beam 9 by means of a pin. The upper part of the hanger beam 9 is equipped with a guide chute 10 where slidable insert plates 3 are arranged. The number of insert plates 3 can be determined in accordance with the needs of use. Usually, 10 ~ 30 insert plates 3 can be installed, with the insert plates 3 being connected to each other by a connecting plate 12 (as shown in Fig. 4). Each insert plate 3 is provided with a key-shaped groove 4 composed of a long strip hole and a large round hole (as shown in Fig. 2), and then the hanger beam 9 is provided with a hydraulic driving unit 6 which can drive movement of the insert plates 3 (as shown in Fig. 3). One support rod 5 is provided in the groove 4 of each insert plate 3 and a boss 7 is formed on the upper end of each support rod 5. The boss 7 is preferably threadedly connected to the support rod 5, so that it is easy to adjust. In production, it is configured such that the diameter of the boss 7 is greater than the width of the long strip hole of the groove 4 and less than the diameter of the large round hole of the groove 4. The lower end of each support rod 5 is connected with a set of clamping plates 1 through a short connecting rod 11. In order to facilitate the operation, a switching signal indicating device 8 can be connected to the hydraulic driving unit 6. The switching signal indicating device 8 can be installed in a cab of a carbon block stacking machine by directly using a support platform for sale on the market.

During operation of the present invention, the process of unloading carbon blocks is as follows. When the cab of the carbon block stacking machine controls the hanger beam 9 to go down, the clamping plates 1 thereof also go down. When the bottom of the carbon block is lowered to the ground, the support rod 5 moves upward and the hydraulic driving unit 6 acts, driving movement of the insert plates 3, so that the support rod 5 slides into the long strip hole portion of the groove 4. When the hanger beam 9 goes up, the clamping plates thereof also go up, such that the support rod 5 cannot move downward for reasons that the boss 7 of the support rod 5 is blocked by the long strip hole portion of the groove 4, such that the crank arm mechanisms 2 cannot be opened, with the clamping plates 1 being in an opened state. All the carbon blocks are unloaded as the hanger beam 9 continues to rise.

During operation of the present invention, the process of grasping a carbon block is as follows. When the hanger beam 9 brings the clamping plates 1 to a desired grasping position, the clamping plates 1 go down to be in contact with a surface of the carbon block, then the support rod 5 goes up and a bottom surface of the boss 7 thereof leaves the upper parts of the insert plates 3. At this time, the hydraulic driving unit 6 acts to cause movement of the insert plates 3, so as to enable the support rod 5 to slide to the position of the large round hole of the groove 4. The support rod 5 can be free to fall and the crank mechanisms 2 can be opened. The clamping plates 1 can gradually grasp both sides of the carbon block and grasp the same by the carbon block's own weight as the hanger beam 9 rises

Since the insert plates 3 of the clamp of the present invention are connected to each other, it is possible to consistently open and close more than 20 sets of clamping plates 1 at the same time by one hydraulic driving unit 6, and the time period thereof is adjustable. The grasping and loosening of the clamping plates 1 can be displayed by the signal indicating device 8 which is connected with the hydraulic driving unit 6. The signal indicating device 8 is mounted in the cab, and thus can be conveniently monitored at any time by an operator. Since the boss 7 of the support rod 5 is adjustable, the operation of present invention will not be affected by height errors of carbon blocks.

## Claims

1. A guidable plate inserted switching mechanism of a clamp for use in a carbon block stacking machine, comprising clamping plates (1) and crank arm mechanisms (2), the lower end of each set of crank arm mechanism (2) being connected with a set of clamping plates (1), **characterized in that** the upper end of each set of crank arm mechanism (2) is connected to a hanger beam (9), the upper part of the hanger beam (9) is equipped with a guide chute (10) where slidable insert plates (3) are arranged, each of the insert plates (3) is provided with a key-shaped groove (4) composed of a long strip hole and a large round hole, the hanger beam (9) is provided with a hydraulic driving unit (6) which can drive movement of the insert plates (3), one support rod (5) is provided in the groove (4) of each insert plate (3) and a boss (7) is formed on the upper end of each support rod (5), the diameter of the boss (7) being greater than the width of the long strip hole of the groove (4) and less than the diameter of the large round hole of the groove (4), the lower end of each support rod (5) is connected with a set of clamping plates (1) through a short connecting rod (11).

2. The guidable plate inserted switching mechanism of a clamp for use in a carbon block stacking machine according to claim 1, **characterized in that** the hanger beam (9) is equipped with more than two insert plates (3), and each of the insert plates (3) is connected with a set of clamping plates (1) through the support rod (5).

3. The guidable plate inserted switching mechanism of a clamp for use in a carbon block stacking machine according to claim 1 or 2, **characterized in that** the insert plates (3) are connected with each other by a connecting plate (12).

4. The guidable plate inserted switching mechanism of a clamp for use in a carbon block stacking machine according to claim 1, **characterized in that** the hydraulic driving unit (6) is connected with a switching signal indicating device (8).
